Europäisches Patentamt

European Patent Office

Office européen des brevets

(19)

(11) Publication number: **0 012 134**
**A1**

# EUROPEAN PATENT APPLICATION

(21) Application number: **78300696.8**

(22) Date of filing: **29.11.78**

(51) Int. Cl.³: **C 09 D 3/00, B 05 D 7/16, C 08 L 25/06, C 08 F 20/00**

(43) Date of publication of application: **25.06.80**
**Bulletin 80/13**

(84) Designated Contracting States: **DE FR GB**

(71) Applicant: **Union Carbide Agricultural Products Company, Inc., Brookside Avenue, Ambler Pennsylvania 19002 (US)**

(72) Inventor: **Hall, Wilbur S., 126 Germantown Pike Plymouth Meeting, Montgomery Pennsylvania (US)**

(74) Representative: **Northover, Robert Frank et al, SANDERSON & CO. 97 High Street, Colchester, CO1 1TH Essex (GB)**

(54) **Process for forming a polymeric coating on a metallic surface, acidic aqueous coating compositions and coating systems employing such compositions.**

㉗ A process for forming a polymeric coating on a metallic surface, and particularly ferriferous surfaces, comprises contacting the surface with an acidic aqueous coating composition containing a monomer, and to form an effective coating the monomer is chosen to be capable of polymerizing to form a polymer having a multiplicity of groups which are ionizable to form negatively-charged groups on the polymer chain. A process for coating a metallic surface using an autodepositing composition is modified by incorporation into the autodepositing composition of a monomer capable of polymerizing. Coating compositions for use in such processes are also provided, as well as coating systems comprising a metallic surface immersed in the compositions.

EP 0 012 134 A1

## Process for forming a polymeric coating on a metallic surface, acidic aqueous coating compositions and coating systems employing such compositions.

This invention relates to a process for forming a polymeric coating on a metallic surface which comprises contacting the surface with an acidic aqueous coating composition containing a monomer, and in particular to such a process in which the metallic surface is immersed in the coating composition. This invention also concerns acidic aqueous coating compositions for use in such processes, and a coating system comprising a metallic surface immersed in the compositions.

Various types of compositions are known for forming organic or polymeric coatings on metallic substrates.

For example, U.S. Patent No. 3,397,077 to Boller et al discloses a coating composition comprising an aqueous solution containing a water soluble organic resin-forming material and an inorganic oxyacid such as sulphuric, sulphonic, boric, phosphoric or nitric acid. In a coating process utilizing this type of composition, a metallic surface is immersed in the composition and there is formed thereon a polymeric coating as a result of the resin-forming material polymerizing to the extent of forming a solid polymeric material which deposits on the metallic surface. The resin-forming materials disclosed in this Patent are materials which polymerize to form condensation polymers such as amine resins, polyamide resins and polyester resins. The Patent discloses that the inorganic oxyacid is included in the composition in amounts sufficient to effect reaction between the composition and the metallic surface.

British Patent No. 1,155,497 discloses the application to an iron substrate of a resinous coating utilizing an acidic aqueous coating composition comprising: (A) a soluble, polymerizable substituted acrylamide; and (B) a water soluble hydroperoxide, for example $H_2O_2$. The coating process described in this Patent is similar to the process described in the aforementioned Boller et al Patent in that each of the processes involves the use of an aqueous composition which contains acid and a monomeric constituent that polymerizes in the presence of a metallic substrate to form a polymeric or resinous material which deposits on the substrate. The processes described in the aforementioned Patents differ in that the polymeric material formed in the Boller et al process is a condensation polymer, whereas the polymeric material formed in the process of the British Patent is an addition polymer.

In contrast to the processes described in the aforementioned Patents, it is known also to deposit resinous coatings on metallic substrates by immersing the substrates in water-based compositions that contain preformed resinous materials. As such, these types of processes do not rely on the polymerization of monomers in the presence of the metallic substrates, as described in the aforementioned Patents.

Electrocoating is an example of a process in which a resinous coating is deposited on a metallic substrate from a water-based composition containing a preformed polymeric resinous material. As its name implies, the electrocoat process involves the use of electricity.

A relatively recent development in the organic coating field is the provision of water-based coating compositions which are effective, without the aid of electricity, in forming on metallic surfaces immersed therein organic coatings which increase in thickness or weight the longer the time the surfaces are immersed in the composition. For convenience, a coating composition of this type is hereafter referred to as an "autodepositing composition" and coatings formed from such compositions are referred to as "autodeposited coatings". Speaking generally, autodepositing compositions which are so effective comprise acidic aqueous solutions having dispersed therein particles of an organic coating-forming material such as resin particles. Autodeposited coatings are formed from such compositions as a result of their ability to attack and dissolve from the metallic surface metal ions in amounts which cause the particles to deposit on the surface in a manner such that there is a continuous buildup of an organic coating on the surface.

This invention provides a process for forming a polymeric coating on a metallic surface which comprises contacting the surface, with an acidic aqueous coating composition, preferably by immersing the surface therein, the composition containing a monomer capable of polymerizing to form a polymer having a multiplicity of groups capable of ionizing to form negatively-charged groups on the polymer chain.

The invention also provides an aqueous acidic coating composition containing at least one such monomer.

The monomer in the aqueous composition deposits on the metallic substrate in contact with the composition during polymerization of the monomer. In a preferred aspect of the present invention, a carboxylic acid monomer is polymerized by free radical addition polymerization in an acidic aqueous composition having immersed therein a ferriferous surface to form a polymer having a plurality of carboxyl (-COOH) groups. Without in any way limiting the invention to this theory, it is postulated that deposition on the metallic surface of the organic coating-forming material involves bonding of carboxylate (-COO$^\ominus$) groups to the ferriferous surface which has a positive charge as a result of oxidation by the acidic aqueous composition.

In another aspect the present invention provides an autodepositing composition having included therein a monomer which is capable of polymerizing, and a process of coating a metallic surface comprising contacting the surface with such a composition. In preferred form, this aspect of the present invention comprises an autodepositing composition formulated from styrene-butadiene resin solids dispersed in an aqueous solution of hydrofluoric acid and ferric fluoride and having added thereto a monomer capable of forming an addition polymer.

In one embodiment of the present invention, the essential ingredients of the coating composition are water, acid and at least one monomer which is capable of polymerizing to form a polymer which has a multiplicity of groups capable of ionizing to form negatively-charged groups on the polymer chain. Such polymers should include negatively charged groups other than, and in addition to, any terminal negatively-charged groups on the polymer chain. The polymerization coating process of the present invention is carried out under conditions whereby the monomer polymerizes in the water-based composition in the presence of a metallic surface contacted therewith to form a polymer which deposits on the metallic surface. The polymer, which can comprise an addition or condensation polymer, can be formed according to any of the various polymerization mechanisms, for example, free radical addition polymerizations, ionic addition polymerizations, and condensation reactions. Depending on the specific mechanism, the process includes the conditions necessary to initiate the polymerization and to maintain the polymerization, and such conditions are, of course, well known.

The formed polymer is preferably an addition polymer formed by free radical addition polymerization initiated at room temperature. To effect this, the coating composition contains an initiator - that is, a material which generates free radicals - and an appropriate monomer capable of forming in the presence of the initiator the desired polymer.

In general, however, any monomer capable of polymerizing in water and in the presence of the metallic surface to be coated, and having a group capable of ionizing in the composition to form a negatively-charged radical, can be used. Such monomers polymerize to form polymers having negatively-charged groups. Examples of suitable groups include the carboxy (-COOH), hydroxy or phenolic (-OH) and sulphonic (-SO$_3$H) groups which are capable of ionizing respectively to form: -COO$^\ominus$, -O$^\ominus$ and -SO$_3^\ominus$. Preferred monomers are ethylenically-unsaturated carboxylic acids such as, for example, acrylic, methacrylic, ethacrylic and alpha-chloroacrylic acid.

The initiator is preferably capable of generating free radicals at room temperature and also soluble in the composition. Examples of suitable initiators are peroxides, hydroperoxides, organic azo compounds, permanganates, perborates and persulphates. Specific initiators which may be used include hydrogen peroxide, benzoylperoxide, t-butylhydroperoxide and azo-bis-isobutyronitrile. However, the compounds are only exemplary of suitable initiators and other initiators known to those skilled in the art may be used.

The proportion of monomer comprising the composition can vary over a relatively wide range and will depend on various factors including, for example, the amounts of polymer which it is desired to deposit, the time of contact between the metallic surface and the composition and the rate of polymer formation. In general, the amount of monomer will comprise from 0.5 to 50 wt. % of the composition.

When an initiator is employed, the amount used will depend, for example, on the particular initiator used and the monomer being polymerized. In general, however, the initiator will comprise from 0.05% to 10 wt. % of the composition.

The acid in the coating composition should be capable of oxidizing or dissolving metal from the metallic surface to be coated. Thus, the acid is chosen having regard to the surface to be coated, but examples of acids which may be considered for use include hydrofluoric, sulphuric, phosphoric, nitric, hydrochloric, hydrobromic, hydroiodic, acetic, chloroacetic, trichloroacetic, lactic and tartaric acid. Equally, the concentration of acid should be such that the composition dissolves metal from the surface. Depending on the metallic surface being coated and other factors, the pH of the composition will generally fall within the range of about 1.6 to about 6.

In a preferred embodiment of the invention for coating a ferriferous surface the acidic aqueous coating composition contains acrylic acid as the monomer, hydrogen peroxide as initiator and hydrofluoric acid, the polymerization being initiated at room temperature.

In relation to that aspect of the present invention which provides for the addition of a polymerizable monomer to an autodepositing composition, it is pointed out that examples of autodepositing compositions are described in U.S. Patent Nos. 3,585,084, 3,592,699, 3,709,743 and 3,776,848, in British Patent No. 1,241,991, in South African Patent No. 72/1146 and in Belgian Patent of Addition No. 811,841.

In general it may be said that autodepositing compositions are believed to function by attacking a metallic surface to dissolve metal ions in an amount sufficient directly or indirectly to cause organic particles in the composition adjacent the metallic surface to deposit thereon in a continuous fashion, so that there is an increase in the amount of organic material deposited on the surface the longer the time the surface is in contact with the composition. Thus, the deposition of the organic material on the metallic surface is achieved through chemical action of the coating composition on the metallic surface, and the use of electricity which is necessary for coating methods, such as in electrodeposition is not required.

The aforementioned earlier Patents provide examples of depositing compositions which may be used in the process of this invention.

U.S. Patent Nos. 3,585,084 and 3,592,699 disclose aqueous compositions comprising resin solids, an acid (for example, hydrofluoric, sulphuric, hydrochloric, nitric, phosphoric, hydrobromic, hydroiodic, chloroacetic, trichloroacetic, lactic, tartaric or acetic) and an oxidizing agent (for example, hydrogen peroxide or a dichromate, perborate, bromate, permanganate, nitrate or chlorate). The ingredients are present in amounts which are effective in dissolving metal from the metallic surface immersed therein to form in the composition ions in a sufficient amount to cause the resin particles to deposit on the metallic surface in a manner such that the resinous coating grows with time. Exemplary compositions disclosed in said Patents are effective in dissolving at least about 25 mg/sq.ft. of an iron surface within the first minute of time the surface is immersed in the composition. For this purpose, the composition contains sufficient acid to impart a pH of less than 7 to the composition, and preferably a pH of from 1.6 to 3.8. The oxidizing agent is present in an amount sufficient to provide an oxidizing equivalent of at least about 0.01 per litre of the composition. The preferred composition described in the aforementioned Patents comprises from 5 to 550 g/l of resin solids, hydrofluoric acid in an amount sufficient to impart to the composition a pH within the range of from 1.6 to 3.8 and equivalent to from 0.4 to 5 g/l of fluoride, and as an oxidizing agent, dichromate or most preferably hydrogen peroxide, in an amount to provide from 0.01 to 0.2 of oxidizing equivalents per litre of composition.

U.S. Patent No. 3,709,743 discloses an acidic aqueous coating composition having a resin solids content of from 2 to 65 wt. %, preferably from 5 to 20 wt. %, and nitric acid in an amount of from 0.1 to 5 wt. %, preferably from 0.5 to 2 wt. %, with the preferred pH of the composition being below about 2.

0012134

South African Patent No. 72/1146 discloses an acidic aqueous coating composition containing from 5 to 550 g/l of resin solids, a soluble ferric-containing compound in an amount equivalent to from 0.025 to 3.5 g/l ferric ion, and preferably from 0.3 to 1.6 g/l of ferric ion, and acid in an amount sufficient to impart to the composition a pH within the range of from 1.6 to 5.0. Optionally an oxidizing agent may be used in an amount to provide from 0.01 to 0.2 oxidizing equivalents per litre of composition. Examples of the aforementioned ferric-containing compounds are ferric fluoride, ferric nitrate ferric chloride, ferric phosphate and ferric oxide. Examples of acids are sulphuric, hydrochloric, hydrofluoric, nitric, phosphoric and organic acids, including, for example, acetic, chloroacetic and trichloroacetic. Hydrofluoric acid is preferred. Examples of oxidizing agents are hydrogen peroxide or a dichromate, permanganate, nitrate, persulphate or perborate. The preferred composition is described as being prepared from 5 to 550 g/l of resin solids, from 1 to 5 g/l of ferric fluoride trihydrate and hydrofluoric acid in an amount sufficient to impart to the composition a pH within the range of from 1.6 to 5.0.

Belgian Patent of Addition No. 811,841 discloses a coating composition containing from 5 to 550 g/l of resin solids, a metal-containing compound which is soluble in the composition and acid to impart to the composition a pH within the range of from 1.6 to 5.0. Examples of the soluble metal-containing compound are silver fluoride, ferrous oxide, cupric sulphate, cobaltous nitrate, silver acetate, ferrous phosphate, chromium fluoride, cadmium fluoride, stannous fluoride, lead dioxide and silver nitrate. The metal compound is present in the composition in an amount within the range of from 0.025 to 50 g/l. The preferred acids and oxidizing agents which may be used in the composition are as described hereinbefore in relation to South African Patent No. 72/1146.

British Patent No. 1,241,991 discloses an acidic aqueous coating composition containing an oxidizing agent and solid resin particles stabilized with an anionic surfactant. The composition is substantially free of nonionic surfactant. The resin particles comprise from 5 to 60 wt. %, and preferably from 10 to 30 wt. %, of the composition. The anionic surfactant comprises from 0.5 to 5 wt. %, preferably from 2 to 4 wt. %, based on the weight of the resin. Examples of anionic surfactants are alkyl, alkyl/aryl or naphthalene sulphonates, for example sodium dioctyl sulphosuccinate and sodium dodecylbenzene sulphonate. The oxidizing agent is of the kind commonly known as a depolarizer, and preferably is present in the composition in an amount of from 0.02 to 0.2 N. Examples of such oxidizing agents are hydrogen peroxide, p-benzoquinone, p-nitrophenol, persulphate and nitrate. Acids such as phosphoric, hydrochloric, sulphuric, acetic, trichloroacetic and nitric acid are used to impart to the composition a pH of preferably less than 5, most preferably less than 3.5.

A particularly preferred autodepositing composition to which a monomer is added according to this invention comprises a ferric-containing compound, most preferably ferric fluoride, in an amount such that it contains the equivalent of from 0.5 to 3.5 g/l of ferric iron, from 0.2 to 5 g/l of hydrofluoric acid and from 50 to 125 g/l of resin solids, the composition having a pH of about 1.6 to about 4.

The monomer added to the autodepositing composition can be any material which is capable of polymerizing in the composition in the presence of a metallic surface contacted therewith or which is capable of polymerizing after the composition has been deposited on a metallic surface in the form of a wet film. For example, in the latter case the monomer may polymerize during a post treatment step in which the preformed coating of deposited resinous material is fused at elevated temperatures.

Thus, it should be understood that the monomer may polymerize substantially, completely or partially while the metallic surface is immersed in the composition or the polymerization may only be effected after withdrawal from a bath of the composition.

Any monomer capable of polymerizing under the conditions described above can be used, including monomers capable of forming addition polymers, condensation polymers and other specialized types of polymers. The mechanism of the polymerization may be, for example, free radical addition polymerization, ionic addition polymerization, condensation reactions or ring-opening reactions, as well as various other types of polymerization reaction.

Examples of suitable monomers include ethylenically unsaturated compounds such as ethylene, propylene, isobutylene, acrylic, methacrylic and ethacrylic acids, methyl methacrylate, ethyl acrylate, ethyl methacrylate, butyl methacrylate, octadecyl methacrylate, cyclohexyl methacrylate, methoxymethyl methacrylate, acrylonitrile, beta-diethylaminoethyl methacrylate, chloroethyl methacrylate, methacrylic anhydride, alpha-chloroacrylic acid, vinyl and vinylidene halides (for example, vinyl fluoride, vinyl chloride, vinylidene chloride, vinylidene fluoride and vinylidene fluorochloride), vinyl esters (for example, vinyl acetate, vinyl propionate, vinyl stearate, vinyl laurate, vinyl chloroacetate), aryl vinyl compounds (for example, styrene, para-chlorostyrene, vinyl naphthalene) and other types of vinyl derivatives such as vinyl pyridine; methyl vinyl ketone, vinyl ethyl ether and vinyl isobutyl ether.

Most preferably the monomer is one capable of forming an addition polymer, and a particularly preferred monomer is diacetone acrylamide.

The amount of monomer can vary over a wide range and will depend on various factors including the amount of resin that it is desired to deposit, the time of contact with the coating composition and the rate of polymerization. In general, the amount of monomer will comprise from 0.5 to 50 wt. % of the composition.

Depending upon the particular monomer involved and the type of polymerization conducted, the composition can include initiators such as the initiators mentioned hereinbefore, polymerization catalysts, chain transfer agents and/or the polymerization can be conducted under conditions whereby polymerization is initiated by heating or ultra-violet radiation.

With respect to each of the embodiments of the present invention, it should be understood that the acidic aqueous composition or the autodepositing composition may contain more than one monomer so that on polymerization a copolymer or a higher polymer is formed.

The following general remarks are applicable to each of the processes of the invention - that is to say, both to processes employing acidic aqueous coating compositions containing a monomer capable of polymerizing to form a polymer with a multiplicity of ionizable groups and to processes employing autodepositing compositions containing a polymerizable monomer.

The compositions used in the present invention may also include pigments and/or other ingredients normally added to autodepositing compositions provided that those additional ingredients do not interfere with the polymerization reactions.

Although the invention is described in the following Examples below in relation to ferriferous surfaces, the invention may also be used in the treatment of surfaces comprising other metals - for example, aluminium and zinc surfaces.

The coating composition can be contacted with the metallic surface in a variety of ways including, for example, by spraying and flow coating, but it is believed that the most effective method of contact will comprise immersing the metallic surface in the coating composition at room temperature. It is believed that for most applications, a useful coating thickness may be obtained by immersing the metal surface in the composition for from 30 seconds to 5 minutes. However, it should be understood that longer or shorter periods of time can be used if this is dictated by the requirements for the coating.

Although it is preferred to bring about polymerization of the monomer at room temperature, elevated temperatures can be used if this is more convenient.

Agitating the composition has been found useful in maintaining it uniform, and so promotes the formation of uniform coatings.

After contact with the composition, the coated metal surface can be subjected to further processing steps to improve and/or consolidate the formed coating, and such steps are described briefly hereinafter.

Rinsing the coated surface with water after withdrawal from the coating composition, and before significant drying takes place, is effective in removing residual amounts of materials such as acid and other ingredients of the coating composition that may adhere to the coated surface.

If desired, the corrosion resistant properties of the coated surface can be improved by contacting the coated surface with an acidic aqueous rinse solution containing hexavalent chromium. Such rinse solutions can be prepared from chromium trioxide or a water-soluble dichromate or chromate salt such as, for example, the ammonium, sodium and potassium salts. The rinse composition may alternatively be a chromium composition obtained by treating a concentrated aqueous solution of chromic acid with formaldehyde to reduce a portion of the hexavalent chromium. This type of rinse composition, which is described in U.S. Patent No. 3,063,877, contains both chromium in its hexavalent state and reduced chromium in aqueous solution. It has been reported in U.S. Patent No. 3,647,567 that the water and salt spray resist-

0012134

ance of a fused resinous coating can be improved by contacting the unfused coating with a solution, preferably an aqueous solution, of phosphoric acid. The recommended amount of phosphoric acid in the solution is from 0.25 to 7 wt. % based on the total weight of the solution.

Following any rinse steps employed after the coated surface is withdrawn from the composition, the coating should be dried. Fusion of the resinous coating renders it continuous, thereby improving its resistance to corrosion and adherence to the underlying metal surface.

The conditions under which the drying and/or fusion operation is carried out depend somewhat upon the type of resin employed. In general, heat will be required to fuse the resin. However, there are applications where air dried coatings can be used satisfactorily. The fusion of the coating should obviously be carried out below temperatures which cause the resinous coating to degrade. By way of example, coatings produced according to the present invention have been fused satisfactorily at temperatures of from 100 to 225°C for periods of time of from 10 to 30 minutes, depending on the mass of the coated part. Baking the coating long enough for the metal surface to reach the temperature of the heated environment has been used satisfactorily. The baking step may also be used to complete polymerization of any unreacted monomers in the coating.

The invention extends to coating systems comprising a metallic surface immersed in a coating composition of the invention.

The invention thus provides processes, compositions and coating systems enabling polymeric coatings to be formed on metallic surfaces by employing monomers. Compositions containing monomers may be more easily handled and stored than those containing exclusively polymeric materials because of the lower molecular weight of the monomers. Furthermore, by use of monomers it is possible to provide more versatile coating processes in which a polymer or copolymer may be formed in situ and deposited as a coating on a metallic surface. As indicated herein, where an acidic aqueous coating composition contains a monomer capable of forming a polymer having a multiplicity of groups ionizable to become negatively-charged, it is believed that those ionizable groups contribute to the bonding of the polymer to the metallic surface. Furthermore by incorporating a monomer capable of polymerizing into an autodepositing composition one is able to make that composition more versatile and/or to enhance the properties of the coating produced thereby and/or to enhance the bonding of the coating to the metallic surface.

The following Examples are now given, though only by way of illustration, to show in more detail ways of carrying out the invention.

### Example 1

In this Example a coating composition containing a carboxylic acid monomer is polymerized at room temperature by free radical addition polymerization utilizing hydrogen peroxide as an initiator.

The following coating composition was prepared:

| Ingredients | Amounts |
|---|---|
| acrylic acid | 50 ml |
| HF | 2.1 g |
| $H_2O_2$ | 2 g |
| water | to make 1 litre |

A clean steel panel was immersed in the above composition with agitation for about 5 minutes. When the panel was withdrawn from the composition, it was observed firstly that a thick resinous film had formed thereon and secondly that the film adhered to the panel even when the panel was rinsed with water. The coated panel was baked in an oven at 215°C for 10 minutes. After baking, the panel bore a fused resinous coating having the texture of orange peel.

Example 2

This Example illustrates the use of an autodepositing composition having included therein an ethylenically-unsaturated monomer capable of forming an addition polymer.

The following coating composition was prepared:

| Ingredients | Amounts |
| --- | --- |
| latex containing about 54% solids | 180 g |
| ferric fluoride | 3 g |
| hydrofluoric acid | 2.3 g |
| diacetone acrylamide | 10 g |
| black pigment dispersion | 5 g |
| water | to make 1 litre |

The resin of the latex used in the above composition comprised about 62% styrene, about 30% butadiene, about 5% vinylidene chloride and about 3% methacrylic acid. A film formed from the resin is soluble in refluxing chlorobenzene to the extent of about 13%. That the resin is cross-linked is indicated by its insolubility in Soxhlet extraction with chlorobenzene. The water soluble content of the latex is about 2% based on the weight of dried resin, with the water soluble content comprising about 10% sodium phosphate, about 13% sodium oleoyl isopropanolamide sulphosuccinate and about 75% sodiun dodecylbenzene sulphonate, the first of these ingredients being a buffering agent used in preparing the latex, and the latter two ingredients being emulsifiers. The pH of the latex was about 7.8 and the surface tension thereof about 45-50 dynes/cm. The average particle size of the resin was about 2,000 Å.

The black pigment dispersion used in the above composition is an aqueous dispersion having a total solids content of about 36%. Carbon black comprises about 30% of the dispersion. It has a pH of 10-11.5 and a specific gravity of about 1.17. The dispersion contains a nonionic dispersing agent for the solids, and is sold under the Trade Mark Aquablak 115.

A clean steel panel was immersed in the aforementioned coating composition at room temperature for 90 seconds, and one minute after withdrawing the panel from the composition it was rinsed with running tap water. Thereafter, the coated panel was immersed in an aqueous solution containing about 9 g/l of $Na_2 Cr_2O_7.2H_2O$ for 30 seconds and then baked in an oven having a temperature of about $170^\circ C$. The coating had a uniformly glossy jet black appearance and a thickness of 1.3 mils (0.033 mm).

The coated panel was subjected to salt spray testing (ASTM D-117). After 168 hours of salt spray exposure, scribe failure was 1/32" (0.79 mm) and the coated panel was awarded an 8.0 rating. After 336 hours of salt spray exposure, scribe failure was still only 1/32" (0.79 mm) and the coated panel was again awarded an 8.0 rating. Salt spray testing of such duration is an extremely severe evaluation of corrosion resistance and the results indicate excellent corrosion resistant properties of the coatings formed by the invention.

Other steel panels were treated in the same way, except that immediately after withdrawal from the composition, the coated panels were rinsed with running tap water. The coatings adhered well to the panels and resisted being washed off by the running tap water.

The above Examples illustrate the use of specific soluble monomers to form the polymeric coating. It should be understood that other monomers can be used as indicated hereinbefore. It should be understood also, with respect to Example 2, that other preformed resins can be used in the basic autodepositing composition. Thus, other styrene-butadiene polymers and acrylonitrile-butadiene, polyethylene, acrylic, tetrafluoroethylene, polyvinyl chloride and urethane resins may be employed.

## CLAIMS

1. A process for forming a polymeric coating on a metallic surface which comprises contacting the surface with an acidic aqueous coating composition containing a monomer characterized in that the monomer is capable of polymerizing to form a polymer having a multiplicity of groups capable of ionizing to form negatively-charged groups on the polymer chain.

2. A process for forming a polymeric coating on a metallic surface which comprises immersing the surface in an acidic aqueous composition containing a monomer to form a polymeric coating.on the surface during immersion in the composition characterized in that the monomer is such that the formed coating comprises a polymer having a multiplicity of groups capable of ionizing to form negatively-charged groups on the polymer chain.

3. A process as claimed in Claim 1 or Claim 2, characterized in that the composition includes an initiator and a monomer capable of forming an addition polymer.

4. A process as claimed in Claim 3, characterized in that the monomer is an ethylenically unsaturated carboxylic acid.

5. A process as claimed in Claim 4, characterized in that the metallic surface is a ferriferous surface and in that the composition contains acrylic acid monomer, hydrogen peroxide initiator and hydrofluoric acid, the polymerization of the monomer being initiated at room temperature.

6. An acidic aqueous coating composition containing a monomer characterized in that the monomer is capable of polymerizing to form a polymer having a multiplicity of groups capable of ionizing to form negatively-charged groups on the polymer chain.

7. A process for coating a metallic surface comprising contacting the surface with an autodepositing composition characterized in that the autodepositing composition contains a monomer which is capable of polymerizing.

8.    A process as claimed in Claim 7, characterized in that the metallic surface is immersed in said composition and the monomer polymerizes and deposits on the surface during the immersion.

9.    A process as claimed in Claim 7, characterized in that the monomer is capable of forming an addition polymer.

10.    A process as claimed in Claim 9, characterized in that the monomer is diacetone acrylamide.

11.    An autodepositing composition characterized in that it contains a monomer capable of polymerizing.

12.    A coating system comprising a metallic surface immersed in an acidic aqueous coating composition characterized in that the coating composition is a composition as claimed in Claim 6 or Claim 11.

0012134

AMENDED CLAIMS

1.     A process for forming a polymeric coating on a
metallic surface which comprises contacting the surface
with an acidic aqueous coating composition consisting of
water, acid and a monomer <u>characterised</u> <u>in</u> <u>that</u> the
monomer is capable of polymerizing at room temperature
to form a polymer having a multiplicity of groups
capable of ionizing to form negatively-charged groups
on the polymer chain and which is soluble in the acidic
medium of the composition, and <u>in</u> <u>that</u> the process further
comprises polymerizing said monomer to form the polymer
on the surface.

2.     A process for forming a polymeric coating on a metallic surface which comprises immersing the surface in an acidic
aqueous composition consisting of water, acid, an initiator,
and a monomer to form a polymeric coating on the surface
during immersion in the composition <u>characterised</u> <u>in</u> <u>that</u>
the monomer is such that the formed coating comprises a
polymer having a multiplicity of groups capable of ionizing
to form negatively-charged groups on the polymer chain.

3.     A process as claimed in claim 1 or claim 2 <u>character-</u>
<u>ised</u> <u>in</u> <u>that</u> the composition includes an initiator and the
monomer is capable of forming an addition polymer.

4.     A process as claimed in claim 3, <u>characterised</u> <u>in</u>
<u>that</u> the monomer is an ethylenically unsaturated carboxylic
acid.

5.     A process as claimed in claim 4, <u>characterised</u> <u>in</u>
<u>that</u> the metallic surface is a ferriferous surface and
in that the composition contains acrylic acid monomer,
hydrogen peroxide initiator and hydrofluoric acid, the
polymerization of the monomer being initiated at room
temperature.

6.     An acidic aqueous coating composition containing
a monomer <u>characterised</u> <u>in</u> <u>that</u> the monomer is capable
of polymerizing to form a polymer having a multiplicity
of groups capable of ionizing to form negatively-charged
groups on the polymer chain.

7.     A process for coating a metallic surface comprising
contacting the surface with an autodepositing composition characterized in that the autodepositing composition contains a monomer which is capable of polymerizing.

8. A process as claimed in Claim 7, characterized in that the metallic surface is immersed in said composition and the monomer polymerizes and deposits on the surface during the immersion.

9. A process as claimed in Claim 7, characterized in that the monomer is capable of forming an addition polymer.

10. A process as claimed in Claim 9, characterized in that the monomer is diacetone acrylamide.

11. An autodepositing composition characterized in that it contains a monomer capable of polymerizing.

12. A coating system comprising a metallic surface immersed in an acidic aqueous coating composition characterized in that the coating composition is a composition as claimed in Claim 6 or Claim 11.

European Patent Office

**EUROPEAN SEARCH REPORT**

0012134

Application number

EP 78 30 0696

| | DOCUMENTS CONSIDERED TO BE RELEVANT | | CLASSIFICATION OF THE APPLICATION (Int. Cl.²) |
|---|---|---|---|
| Category | Citation of document with indication, where appropriate, of relevant passages | Relevant to claim | |
| X | FR - A - 2 312 302 (SOCIETE CONTI-NENTAL PARKER) <br> * Page 1, lines 1-16; page 2, line 6 - page 3, line 3; page 4, lines 24-39 * <br> -- | 1-9, 11,12 | C 09 D 3/00 <br> B 05 D 7/16 <br> C 08 L 25/06 <br> C 08 F 20/00 |
| | US - A - 3 873 349 (T. KIMURA) <br> * Column 1, line 52 - column 2, line 20; example VII; claim 1 * <br> -- | 1-9, 11,12 | |
| D | GB - A - 1 155 497 (W.R. GRACE) <br> * Page 3, lines 20-31 * <br> -- | 1,3,5, 10 | TECHNICAL FIELDS SEARCHED (Int.Cl.²) <br><br> B 05 D 7/16 <br> C 09 D 3/00 <br> C 08 L 25/06 <br> 33/02 <br> 33/26 <br> C 08 F 20/00 <br> 20/02 <br> 20/04 <br> 20/06 |
| | FR - A - 2 193 067 (THE LUBRIZOL) <br> * Claims 1-5 * <br> -- | 9 | |
| AD | US - A - 3 585 084 (L. STEIN-BRECHER) | | |
| AD | US - A - 3 397 077 (E.R. BOLLER) | | |
| AD | US - A - 3 709 743 (J.O. DALTON) | | |
| AD | US - A - 3 776 848 (W.S. HALL) | | CATEGORY OF CITED DOCUMENTS |
| AD | GB - A - 1 241 991 (I.C.I.) | | X: particularly relevant <br> A: technological background <br> O: non-written disclosure <br> P: intermediate document |
| AD | FR - A - 2 219 966 (AMCHEM PRODUCTS) <br> & BE - A - 1 811 841 | | T: theory or principle underlying the invention <br> E: conflicting application <br> D: document cited in the application <br> L: citation for other reasons |
| A | FR - A - 2 375 915 (AMCHEM PRODUCTS) | | |
| | ./. | | |

| ✗ | The present search report has been drawn up for all claims | | |
|---|---|---|---|
| Place of search | Date of completion of the search | Examiner | |
| The Hague | 05-07-1979 | FRIDEN | |

| DOCUMENTS CONSIDERED TO BE RELEVANT | | | CLASSIFICATION OF THE APPLICATION (Int. Cl.²) |
|---|---|---|---|
| Category | Citation of document with indication, where appropriate, of relevant passages | Relevant to claim | |
| A | US - A - 3 592 699 (L. STEIN-BRECHER) | | |
| AD | FR - A - 2 141 029 (AMCHEM) & ZA - A - 72 1146 ---- | | |

TECHNICAL FIELDS SEARCHED (Int. Cl.²)